# EUROPEAN PATENT SPECIFICATION

(11) **EP 3 108 691 B1**
(45) Date of publication and mention of the grant of the patent: **27.02.2019**
(21) Application number: 14835495.4
(22) Date of filing: 10.10.2014
(51) Int. Cl.: H04W 36/22, H04W 48/18, H04W 88/06, H04W 84/12

(54) **TRAFFIC STEERING IN A WLAN BASED ON TRANSMIT POWER CONTROL**
VERKEHRSSTEUERUNG IN EINEM WLAN AUF DER BASIS VON SENDELEISTUNGSSTEUERUNG
ORIENTATION DE TRAFIC DANS UN RÉSEAU LOCAL SANS FIL (WLAN) SUR LA BASE D'UNE COMMANDE DE PUISSANCE DE TRANSMISSION

(30) Priority: 21.02.2014 US 201461943071 P
(43) Date of publication of application: 28.12.2016
(73) Proprietor: Telefonaktiebolaget LM Ericsson (publ), 164 83 Stockholm (SE)
(72) Inventor: WILLIAMS, Christopher, Nepean, Ontario K2G 5B5 (CA); ELAHI, Aroosh, Gloucester, Ontario K1T 1J1 (CA); PARAVALOS, Evangelos, Kanata, Ontario K2K 2N1 (CA); RAYMENT, Stephen, Ottawa, Ontario K1R 1E2 (CA)
(74) Representative: Ericsson
(86) International application number: PCT/IB2014/065221
(87) International publication number: WO 2015/124968

(56) References cited:
- EP-A2- 2 688 339
- WO-A2-2007/076147
- US-A1- 2004 229 621
- US-A1- 2006 153 151
- US-A1- 2007 248 033
- US-A1- 2008 096 575
- US-A1- 2012 224 481

## Description

### TECHNICAL FIELD

The present disclosure relates generally to connection management for dual mode user equipments (UEs) and, more particularly, to methods and apparatus for steering UEs between a Wireless Local Area Network (WLAN) and cellular networks, or between different access points in a WLAN.

### BACKGROUND

Most UEs currently on the market are dual mode UEs with the ability to connect to both cellular networks and WLANs. For example, a dual mode UE may be capable of connecting to either a 3rd Generation Partnership Project (3GPP) cellular network, such as a Long-Term Evolution (LTE) network, or to a WLAN, such as a WiFi network based on the IEEE 802.11 family of standards.

UEs as described herein may comprise or represent any device used for wireless communications. Examples of user equipment that may be used in certain embodiments of the described wireless and mobile networks are wireless devices such as mobile phones, mobile terminals, terminals, stations (e.g. in the IEEE 802.11 standard a UE may be a station (STA)), smart phones, portable computing devices such as lap tops, handheld devices, tablets, net books, computers, personal digital assistants, machine-to-machine devices such as sensors or meters (e.g. wireless devices in which there is no end user associated with the device), and other wireless communication devices that may connect to wireless and/or mobile networks.

Licensed spectrum used for 3GPP cellular networks is a premium commodity with a higher per bit cost compared to the unlicensed WLAN spectrum. Therefore, network operators are increasingly utilizing WLANs as a data offload strategy for 3GPP cellular networks. Therefore, dual mode UEs offered by most network operators dual exhibit a marked preference for connecting via a WLAN for data services rather than a 3GGP network when a WLAN is available.

Due to the inherent preference for WLANs over 3GPP cellular networks, steering a UE to connect to a WLAN is not difficult. However, most UEs dislike moving from a WLAN to 3GPP cellular network for their data service even when the user experience with the WLAN is poor. In such situations, de-authentication techniques can be used to steer a UE from the WLAN and to a 3GPP cellular network. However, forcing UEs to steer away from the WLAN using traditional de-authentication techniques may result in the UEs "blacklisting" the WLAN's Service Set Identifier (SSID). When the UE is de-authenticated, the WLAN may still be visible to the UE and the UE may attempt to reconnect to the WLAN. If the UE is de-authenticated and subsequent attempts to reconnect are ignored, the UE may "blacklist" the WLAN. The UE may also blacklist if the UE is de-authenticated three times within a five minute time window.

Once a UE "blacklists" a WLAN, the UE will consider the WLAN as unavailable. The UE will exclude the "blacklisted" WLAN when subsequently attempting to connect to a communication network even if the "blacklisted" WLAN is available. The UE will not attempt to connect back to the "blacklisted" WLAN until one of the following events happens:
(1) the user explicitly asks for the UE to connect to the "blacklisted" network;
(2) the UE is placed (or automatically goes) in a sleep mode and is then waken; or
(3) a new application is invoked that requires data connection.

The network operator has no control over UE access selection making it difficult to steer the UE back to the WLAN. The operator's inability to control access selection results in sub-optimal utilization of network resources, potential loss of revenue, and poor user experience in congested networks. Thus, for an operator who has deployed both 3GPP cellular networks and WLANs which provide overlapping coverage, it is highly desirable to control which UEs connect to which networks for data services.

US 2004/0229621 A1 discloses a load balancing system and methodology for packet-based wireless cellular networks, whereby wireless access points are dynamically reconfigured by altering their transmission power level to modify their area of coverage. The modification function is based on the localized traffic load or congestion at each individual access point, or the collective load experienced by groups of access points. This modification to the cellular layout is used as an implicit load-balancing technique. When an overloaded access point reduces its coverage area, it forces some wireless client devices that were earlier within its footprint, but no longer within its coverage area, to attach to alternative access points. Similarly, when an underloaded access point increases its coverage area, it provides an opportunity to wireless devices, which were earlier outside its footprint, but now within the expanded coverage area, to switch attachment to this access point. By changing the access point to which a wireless device attaches, the load-levels on the individual access points are indirectly changed.

US 2007/0248033 A1 relates to minimizing the load on access points in WLANs using a number of methods and associated devices. One method minimizes the load of the most congested access points while a second balances the load on both congested and uncongested access points using an optimal min-max (priority) load balanced solution. It is stated that the optimal solution is obtained without requiring complex modifications. Both methods include adjustments to the transmission power levels of AP beacon messages to reduce congestion, but do not require adjustments to the transmission power levels of AP data traffic channels.

US 2012/0224481 A1 discloses that offering customers QoS and Service Level Agreements in wireless networks means that resilient connectivity of wireless devices with good signal strength, good Signal to Noise and Interference Ratio (SNIR), and adequate useable bandwidth has to be provided, which requires that devices transmitting and receiving packets use over-the-air bandwidth efficiently and manage over-the-air congestion. To this end, QoS measurements and controls are incorporated only in the network (i.e. access points or controllers). It is stated that therefore QoS and Service Level Agreements can be achieved with all deployed client stations versus standards based approaches that require additional capabilities in network nodes, client stations and in most cases modifications to the applications. Additionally, techniques for traffic prioritization, capacity improvements through load distribution, and adjacent channel interference mitigation are disclosed to provide Service Level Agreements.

WO 2007/076147 A2 discloses a system and method for managing call connections between mobile subscribers and an IP-based wireless telecommunications network through a wireless access point. Communications between the mobile subscribers and the IP-based wireless telecommunications network are initiated by a registration request. During the registration request various identifiers (IMSI, MAC address, IP Address, etc.) are communicated to the system. The system is arranged to log the identifiers and associate those identifiers with the entry point (e.g., the wireless access point) into the IP based wireless network. Call connections from the mobile subscribers are monitored for various throughput and call quality based metrics. Call handoffs between the IP-based wireless communications network and the cellular telephony network are managed by the system based on the monitored call quality and throughput metrics on a per-access point basis using the registered identifiers.

### SUMMARY

The present invention provides a method, implemented by a first access point, for steering traffic for one or more user equipment according to independent claim 1, a corresponding computer program product according to independent claim 5 and a first access point according to independent claim 6. Embodiments of the invention are defined in the dependent claims.

The present disclosure relates to methods and apparatus for steering UEs connected to a first access point (AP) in a WLAN to a cellular network or to a second AP in the WLAN having a coverage area overlapping the coverage areas of the first AP. After determining a need to steer traffic for one or more UEs to the cellular network or second AP, the first AP lowers the transmit power of frames transmitted by the AP to effectively shrink the size of the AP's coverage area for the affected UEs. Lowering the transmit power of transmitted frames causes one or more UEs to select a nearby cellular network or another for service. Specifically, a method according to claim 1 implemented by a first AP in a WLAN for steering traffic for one or more UEs from the first access point to a cellular network or to a second access point in the WLAN with an overlapping coverage area; a computer program product according to claim 6 stored in a non-transitory computer-readable medium and containing program code and data for performing such a method; and a first access point according to claim 7 in a WLAN configured to steer traffic for one or more UEs from the first access point to a cellular network or to a second access point in the WLAN with an overlapping coverage area are presented.

Further disclosed is a method implemented by an access point (AP) in a WLAN for steering a UE connected to a first AP in the WLAN to a cellular network to another AP in the WLAN with an overlapping coverage area. The AP determines a need to steer traffic for one or more UEs connected to the first AP to a cellular network or second AP in the WLAN. In response to determining a need to steer traffic, the AP lowers the transmit power of frames sent by the first AP in the WLAN to steer one or more UEs to connect to the cellular network or to the second AP.

In some implementations of the method, the WLAN and the cellular network are operated by the same network operator.

In some implementations of the method, lowering the transmit power of frames sent by the first AP in the WLAN comprise lowering the transmit power of control frames.

In some implementations of the method, the control frames comprises at least one of beacon frames and probe response frames sent by the first AP.

In some implementations of the method, lowering the transmit power of frames sent by the first AP in the WLAN comprises lowering the transmit power of user data frames.

In some implementations of the method, lowering the transmit power of frames sent by the first AP in the WLAN comprises lowering the transmit power of user data frames sent by the first AP to all UEs connected to the first AP.

In some implementations of the method, lowering the transmit power of frames sent by the first AP in the WLAN comprises lowering the transmit power of user data frames sent by the first AP to selected ones of the UEs connected to the first AP.

In some implementations, the method further comprises dynamically lowering the transmit power of the frames during one time period and increasing the transmit power of the frames during another time period.

In some implementations of the method, determining a need to steer traffic for one or more UEs to a cellular network or second AP in the WLAN comprises receiving instructions from a network node in the WLAN to steer traffic for the one or more UEs from the WLAN to the cellular network or to the second AP in the WLAN.

Another aspect of the disclosure relates to a first AP in a WLAN configured to steer a UE connected to the first AP to a cellular network or second AP with an overlapping coverage area. In one implementation, the first AP comprises a transceiver circuit and a processing circuit. The transceiver circuit is configured to communicate with one or more UEs in the WLAN. The processing circuit is configured to determine a need to steer traffic for one or more UEs connected to the first access point to a cellular network or second AP in the WLAN. The processing circuit is further configured to, in response to determining a need to steer traffic, lower the transmit power of frames sent by the first AP to steer one or more UEs to connect to the cellular network or to the second AP.

In some implementations of the first AP, the WLAN and the cellular network are operated by the same network operator.

In some implementations of the first AP, the processing circuit is configured to lower the transmit power of control frames.

In some implementations of the first AP, the processing circuit is configured to lower the transmit power of beacon frames and/or probe response frames sent by the first AP.

In some implementations of the first AP, the processing circuit is configured to lower the transmit power of user data frames.

In some implementations of the first AP, the processing circuit is configured to lower the transmit frames of user data frames sent by the first AP to all UEs in the first AP's coverage area.

In some implementations of the first AP, the processing circuit is configured to lower the transmit power of user data frames sent by the first AP to selected ones of the UEs connected to the first AP.

In some implementations, the processing circuit is further configured to dynamically lower the transmit power of the frames during one time period and increase the transmit power of the frames during another time period.

In some implementations of the first AP, the processing circuit determines a need to steer traffic for one or more UEs to a cellular network or second AP in the WLAN by receiving instructions from a network node in the WLAN to steer traffic for the one or more UEs from the WLAN to the cellular network or to the second AP in the WLAN.

### BRIEF DESCRIPTION OF THE DRAWINGS

Figure 1 illustrates a WLAN and a cellular network with an overlapping coverage area.
Figure 2 illustrates a procedure for steering a UE from a WLAN to a cellular network.
Figure 3 illustrates a WLAN having cells with overlapping coverage area.
Figure 4 illustrates a procedure for steering a UE between cells in a WLAN.
Figure 5 illustrates an exemplary method for steering a UE in a cell of a WLAN to a cellular network or another cell in the WLAN.
Figure 6 illustrates an exemplary access point configured to steer a UE in a cell of a WLAN to a cellular network or another cell in the WLAN.
Figure 7 illustrates the main functional components of a processing circuit in an AP configured for steering a UE connected to a first AP in a WLAN to a cellular network or another AP in the WLAN.
Figure 8 illustrates a computer program product for steering a UE connected to a first AP in a WLAN to a cellular network or another AP in the WLAN.

### DETAILED DESCRIPTION

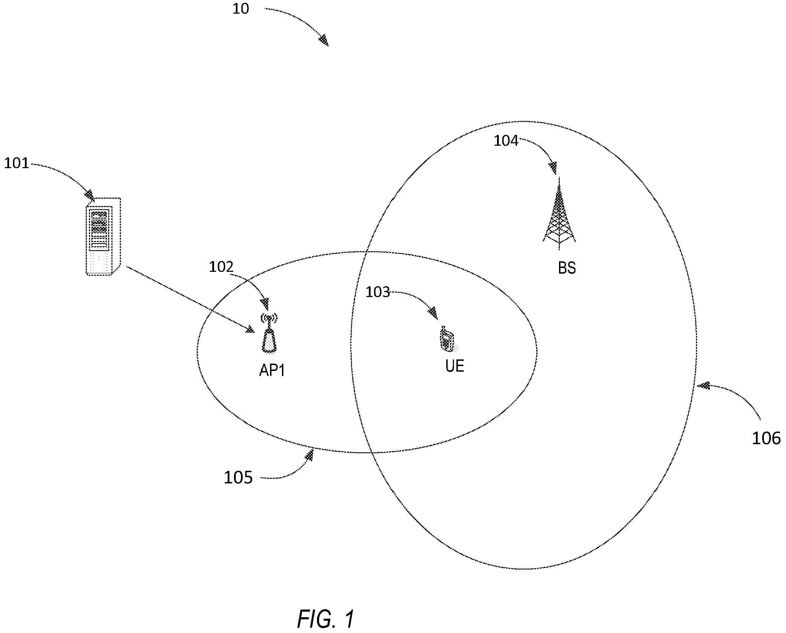

Referring now to the drawings, Fig. 1 illustrates a communication network 10 comprising a WLAN 105 and a cellular network 106 with overlapping coverage areas. The WLAN 105 may comprise a WiFi network based on the IEEE 802.11 family of standards. The cellular network 106 may comprise a 3GPP cellular network, such as a WCDMA network or LTE network. A dual mode UE 103 is located in the overlapping area of the WLAN 105 and cellular network 106. The UE 103 may connect to the cellular network 106 through a base station 104 or to the WLAN 105 through an AP 102. In some embodiments, a WLAN controller 101 in the WLAN configures and manages the AP 102. While Figure 1 illustrates only one UE 103, it will be appreciated many dual mode UEs 103 may be operating in the overlapping coverage area.

The WLAN 105 and a cellular network 106 may be operated by the same network operator or by different network operators. When the WLAN 105 and a cellular network 106 are jointly operated, it is to the operator's advantage to manage the UEs' connections in order to meet a number of operating goals, such as improved user experience, higher per-UE throughput, load balancing between networks, or other goals set by the operator to optimize network performance in some manner. Due to the inherent preference for a WLAN connection over the cellular network connection, the dual mode UE 103 located in the overlapping area of a WLAN 105 and a cellular network 106 will normally choose to connect to the WLAN 105 even if the connection is poor. The techniques described herein may be used to steer a UE 103 connected to an AP 102 in the WLAN 105 to the cellular network 106.

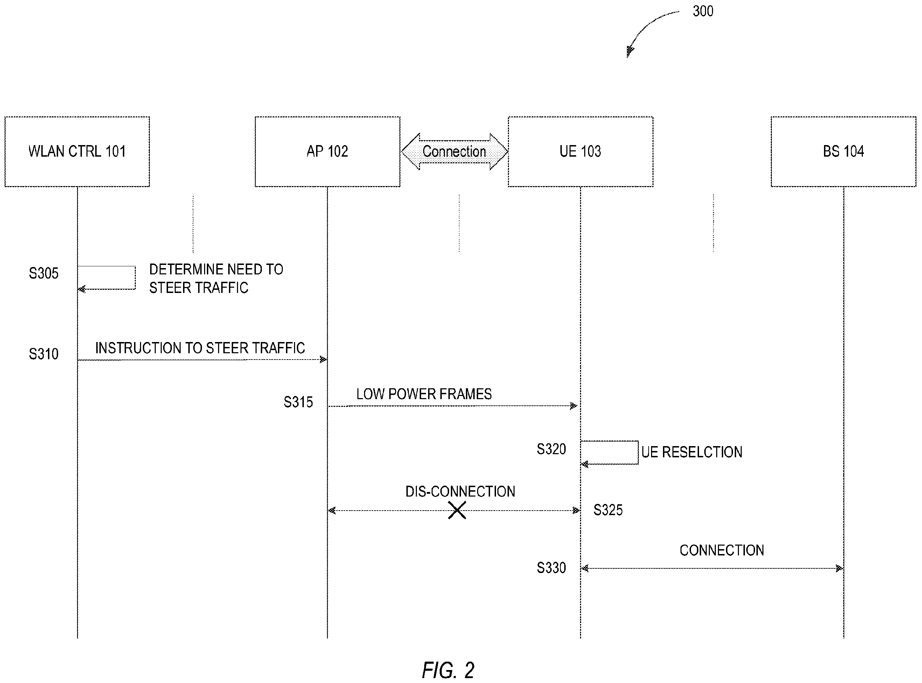

Figure 2 illustrates an exemplary procedure 300 for steering a UE 103 connected to an AP 102 in the WLAN 105 to a cellular network 106 according to one embodiment. It is assumed that the UE 103 is initially connected to an AP 102 in the WLAN 105. The WLAN controller 101 may determine a need to change the connection of one or more UEs 103 from the WLAN 105 to a cellular network (S305). The determination may be based on factors such as network congestion, signal quality, user experience or other factors. The WLAN controller 101 may send instructions to the AP 102 to offload or steer traffic to another network (S310). In some embodiments, the instruction may designate a particular UE 103 or particular group of UEs 103 to be steered to the cellular network 106. In other embodiments, the WLAN controller 101 may not specify which UEs 103 to steer and the AP 102 determines which UEs 103 to steer. In other embodiments, the AP 102 itself may determine the need to steer traffic to the cellular network 106.

When the AP 102 receives an instruction or otherwise determines a need to steer traffic to the cellular network, the AP 102 lowers the transmit power of control frames or user data frames transmitted to the UEs 103 being steered (S315). Lowering the transmit power of the control frames or user data frames effectively shrinks the coverage area of the AP 102 and causes the affected UEs 103 to perform reselection (S320). UEs 103 close to the AP 102 or having good channel conditions may remain connected to the AP 102 while UEs 103 farther away or with poor channel conditions may switch to the cellular network 106. Thus, some of the affected UEs 103 will disconnect from the AP 102 (S325) and establish a connection with the base station 104 in the cellular network 106 (S330).

In some embodiments, the AP 102 varies the transmit power of the WLAN management frames or other control frames. Management frames include both the beacon frames as well as probe response frames. As currently implemented, UEs 103 evaluate and rank APs 102 for initial connection or handoff based on received signal power or signal quality measures. The UEs 103 generally prefer to connect to APs 102 with higher power signal quality. Therefore, lowering the transmit power of beacon frames and probe response frames will cause some of the UEs 103 to perform cell selection. More particularly, UEs near the edge of the AP's coverage area may no longer be capable of receiving the management frames. These UEs 103 near the cell edge may immediately switch to the cellular network 106. UEs 103 closer to the AP102 may still receive the management frames with lower power and therefore rank the AP 102 accordingly. This will encourage the UEs 103 to switch to the cellular network 106 to continue service.

Dynamically adjusting the management frame transmit power of the AP 102 enables the network operator to perform load balancing of UEs 103 between the WLAN 105 and cellular network 106. The transmit power of management frames may be lowered during a first time period when the AP 102 is heavily loaded to steer traffic to the cellular network 106 and raised in a second time period when traffic is light to encourage reconnection to the WLAN 105. In this embodiment, the user data frame transmit power is not changed. Thus, adjusting the management frame transmit power does not impact data transmission to those UEs 103 which remain connected to the AP 102 after a dynamic management frame power adjustment. This technique takes advantage of known UE behavior and does not require any changes to the UE 103. Because the AP 102 does not reject the UE 103, the UE 103 will not blacklist the WLAN 105.

In another embodiment, the AP 102 varies the transmit power of user data frames. Adjustment to the transmit power of user data frames may be done globally for all UEs 103 served by the AP 102, or for individual UEs 103 or groups of UEs 103. Adjusting the data frame transmission power for individual UEs 103 or groups of UEs 103 allows independent control of UE handover preferences for those UEs 103 or groups of UEs 103.

The UE 103 may measure the received signal power or signal quality of the user data frames it receives from the AP 102 and use the measurements in cell selection or handover decisions. Therefore, adjusting the transmit power of user data frames to an individual UE 103 or group of UEs 103 increases the likelihood that the UE 103 will choose to handover to the cellular network 106. UEs 103 near the cell edge may no longer be able to receive the user data frames with sufficient power or quality for decoding and connect with the cellular network 106 to maintain service. UEs 103 closer to the AP102 may still receive the user data frames frames with sufficient power but will rank the AP 102 lower. This will encourage the UEs 103 to switch to the cellular network 106 to maintain service.

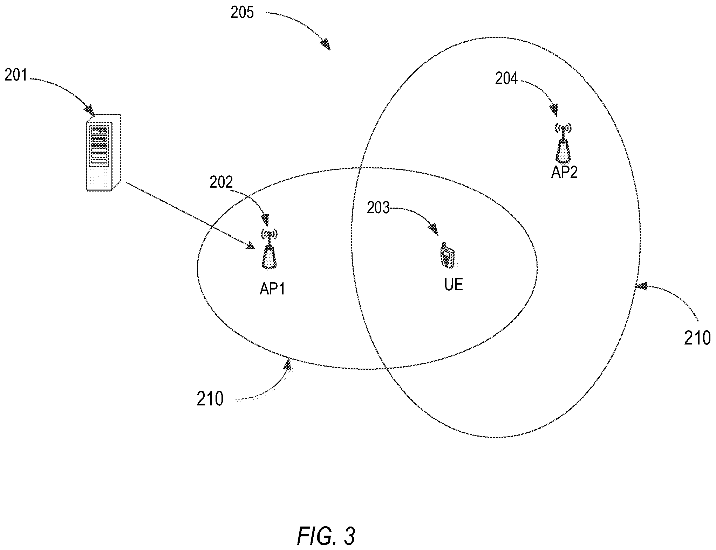

The steering technique based on transmit power adjustment may also be applied to steer UEs between cells within the same WLAN 105. Fig. 3 illustrates a communication network 205 comprising a WLAN 105 having multiple cells 210. For simplicity, only two cells are shown. The communication network 205 may comprise a WLAN 205 based on the IEEE 802.11 family of standards. A dual mode UE 203 is located in the overlapping area of the WLAN cells 210. The UE 203 may connect to the AP 202, 204 in either cell 210. In some embodiments, a
WLAN controller 201 in the WLAN configures and manages the AP 202 and/or 204. While Figure 3 illustrates only one UE 203, it will be appreciated many dual mode UEs 203 may be operating in the overlapping coverage area.

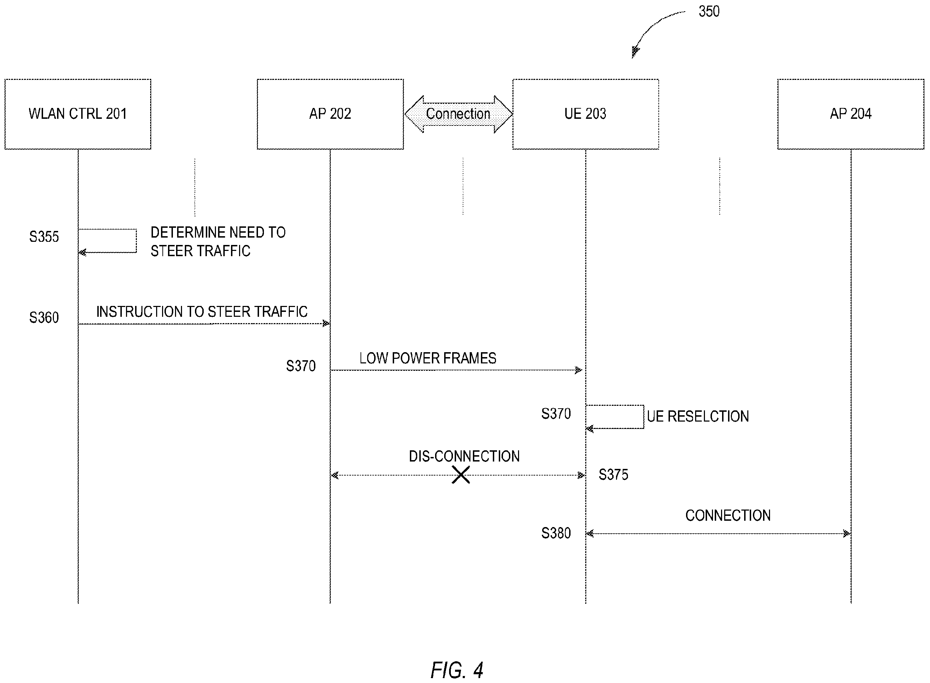

Figure 4 illustrates a procedure 350 for steering UEs 203 between access points 202, 204 in a WLAN 205. It is assumed that the UE 203 is initially connected to a first AP 202 in the WLAN 205. The WLAN controller 201 may determine a need to change the connection of one or more UEs 203 from the first AP 202 to another AP 204 (S355). The determination may be based on several factors such as network congestion, signal quality, user experience or other factors. The WLAN controller 201 may send instructions to the AP 202 to offload or steer traffic to a second AP 204 (S360). It is not necessary to specify the second AP 204. Further, the second AP 204 may be different for different ones of the UEs 203. In some embodiments, the AP 202 itself may determine the need to steer traffic to the cellular network 206.

When the AP 202 receives an instruction to offload or steer traffic to another AP 204, the AP 202 lowers the transmit power of frames transmitted to the UEs 203 being steered (S365). Lowering the transmit power of frames transmitted by the AP 202 will cause some of the UEs 203 to perform cell reselection (S370). UEs 203 close to the AP 202 or having good channel conditions may remain connected to the AP 202 while UEs 203 farther away or with poor channel conditions may switch to a second AP 204. Thus, some of the affected UEs 203 will disconnect from the AP 202 (S375) and establish a connection with the second AP 204 (S380). The transit power of frames may be dynamically lowered in a first time period (e.g. when the AP 102, 202) is heavily loaded) to steer traffic away, and raised during a second time period (e.g., when the AP 102, 202 is lightly loaded to encourage connection to the WLAN 105, 205.

As previously noted, the AP 202 may adjust the transmit power of management frames or user data frames. Management frames include both the beacon frames as well as probe response frames. Adjusting the transmit power of management frames effectively shrinks the coverage area of the AP 202. UEs 203 near the edge of the APs original coverage area may no longer be capable of receiving the management frames and therefore switch to a different AP 204 in the WLAN 105. UEs 203 that remain within the shrunken coverage area will assign a lower ranking to the AP 202 due to the lower signal power or signal quality. This ranking will encourage the UEs 203 to reselect a second AP 204 for service.

In some embodiments, the AP 202 may adjust the transmit power of user data frames transmitted to the UEs 203. The adjustment to the transmit power of the user data frames may be performed globally for all connected UEs 203 or for individual UEs 103 or groups of UEs 203. Because reselection or handover decisions are made based on received signal power or signal quality, adjustment of the transmit power of the user data frames increases the likelihood that the UEs 203 will select a second AP 204 for service. Adjustment of the transmit power of user data frames for individual UEs 103 or groups of UEs 203 gives the network operator a high degree of control over cell selection by the UEs 203.

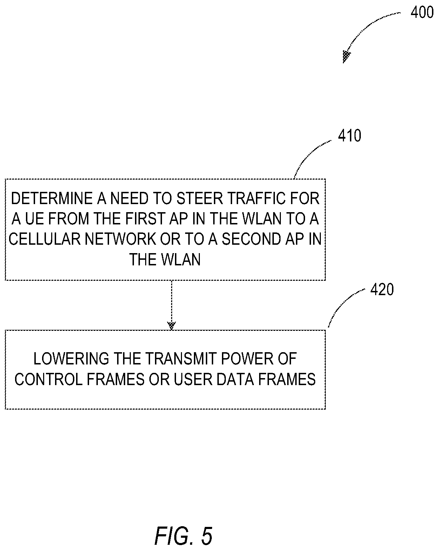

Figure 5 illustrates an exemplary method 400 performed by an AP 102 or 202. The access point 102, 202 determines a need to steer traffic for one or more UEs 203 from the first AP 102, 202 in the WLAN 105, 205 to a cellular network 106 or to a second AP 204 in the WLAN 105, 205 (block 410). Responsive to determining the need to steer traffic, the AP 102, 202 lowers the transmit power of control frames or user data frames transmitted to the UEs 103, 203 (block 420). Adjustment to the transmit power of frames may be performed globally for all UEs 103, 203 within the coverage area of the AP 202. Alternatively, adjusting the transmit power of the control frames or user data frames may be performed for individual UEs 103, 203 or groups of UEs 103, 203. UEs 103, 203 close to the AP 102, 202 or having good channel conditions may remain connected to the AP 102, 202 while UEs 103, 203 farther away or with poor channel conditions may switch to the cellular network 106 or second AP 204 to maintain service. The transit power of frames may be dynamically lowered in a first time period (e.g. when the AP 102, 202) is heavily loaded) to steer traffic away, and raised during a second time period (e.g., when the AP 102, 202 is lightly loaded to encourage connection to the WLAN 105, 205.

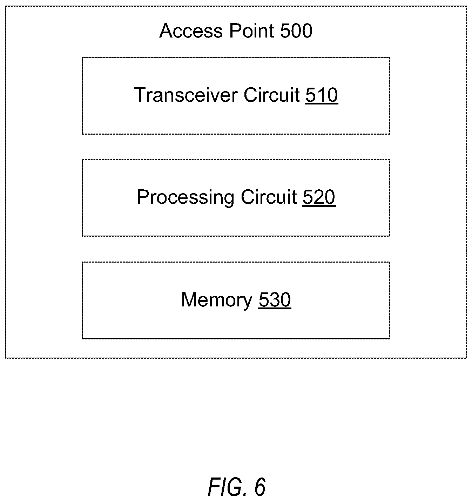

Figure 6 illustrates an exemplary access point 500 for implementing the steering techniques described herein. The AP 500 comprises a transceiver circuit 510, a processing circuit 520, and memory 530. The transceiver circuit 510 is configured to communicate with the one or more UEs 103, 203 over an air interface of the WLAN 105. The processing circuit 520 processes signals transmitted and received by the AP 500, and provides operational control and configuration for the AP 500. The processing circuit 520 may comprise one or more processors, hardware, firmware, or a combination thereof. The processing circuit 520 is configured to implement the methods herein described. The memory 530 may comprise both Random Access Memory (RAM) and Read-Only Memory (ROM), or other non-transitory computer readable medium. Computer program instructions and data required for operation and configuration of the AP 500 may be stored in non-volatile memory, such as Erasable Programmable Read Only Memory (EPROM), Electrically Erasable Programmable Read Only Memory (EEPROM), and/or flash memory. Memory 530 may be implemented as discrete devices, stacked devices, or integrated with one or more processors.

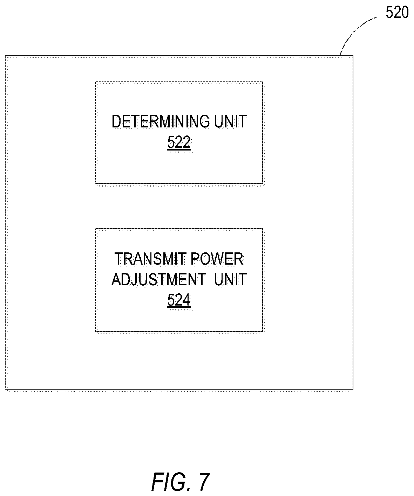

Figure 7 illustrates the main functional components of the processing circuit 520 in more detail. The processing circuit comprises a determining unit 522 and power adjustment unit 524. These units 522 and 524 may be implemented by one or more processors, hardware, firmware or combination thereof. Functions represented by different units 522, 524 may be performed in a single processor or by different processors.

The determining unit 522 determines the need to steer traffic for one or more UEs 103, 203 from a first AP 102, 202 in the WLAN 105, 205 to the cellular network 106 or second AP 204. The decision to steer one or more UEs 103, 203 may be based on a message received from a WLAN controller 101, 201. Alternatively, the determining unit 522 may autonomously
decide to steer one or more UEs 103, 203 to the cellular network 106 or second access point 204. The transmit power adjustment unit 522 adjusts, responsive to a command or instruction from the determining unit 524, the transmit power of control frames or user data frames transmitted to one or more UEs 103, 203. As previously noted, the transmit power adjustments may be applied to control frames or user data frames for all UEs 103 within the coverage area of the AP 102, 202. Alternatively, the transmit power adjusting unit may adjust the transmit power of control frames or user data frames transmitted to individual UEs 103, 203 or groups of UEs 103, 203.

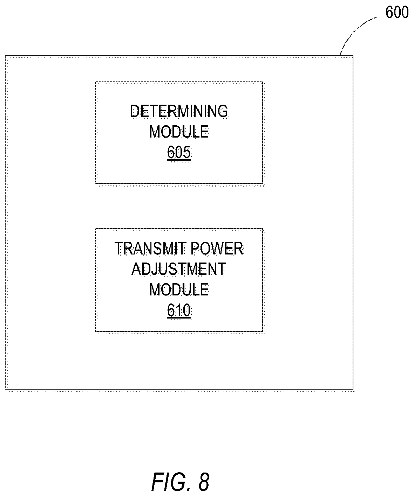

Figure 8 illustrates a computer program product 600 for steering UEs 103, 203 between a first AP 102, 202 in the WLAN 105, 205 to a cellular network 106 or second AP 202 in the WLAN 105, 205. The computer program product 600 comprises a plurality of modules containing program code and data for performing the steering techniques as herein described. The computer program product 600 may be stored in a non-transitory computer readable medium, e.g. memory 530. In one embodiment, the computer program product 600 comprises determining module 605 and power adjustment module 610. The determining module 605 comprises code and data for determining the need to steer traffic for one or more UEs 103, 203 from a first AP 102, 202 in the WLAN 105, 205 to either a cellular network 106 or second AP 204. The transmit power adjustment unit 522 comprises code for adjusting, responsive to a command or instruction from the determining module 605, the transmit power of control frames or user data frames transmitted to one or more UEs 103, 203. As previously noted, the transmit power adjustments may be applied to control frames or user data frames for all UEs 103 within the coverage area of the AP 102, 202. Alternatively, the transmit power adjusting unit may adjust the transmit power of user data frames for individual UEs 203 or groups of UEs 103, 203.

The steering techniques described herein enable traffic steering without risk that the UEs 103, 203 being steered will blacklist the WLAN 105, 205. The steering techniques takes advantage of known UE behavior and does not require any changes to the UE 103. Because the AP 102 does not reject the UE 103, the UE 103 will not blacklist the WLAN 105.

The present invention may, of course, be carried out in other ways than those specifically set forth herein. The present embodiments are to be considered in all respects as illustrative and not restrictive, and all changes coming within the scope of the appended claims are intended to be embraced therein.

## Claims

1. A method implemented by a first access point (102, 202) in a Wireless Local Area Network, WLAN, (105, 205) for steering traffic for one or more user equipment, UEs, (103, 203) from the first access point (102, 202) to a cellular network (106) or to a second access point (204) in the WLAN (105, 205) with an overlapping coverage area, said method comprising:
determining a need to steer traffic for one or more UEs (103, 203) connected to the first access point (102, 202) to a cellular network (106) or second access point (204) in the WLAN (105, 205);
in response to the determining a need to steer traffic, selecting one or more UEs to be steered and lowering the transmit power of user data frames sent by the first access point (102, 202) in the WLAN (105, 205) to the selected UEs (103, 203), as a group, to steer the selected UEs (103, 203) to connect to the cellular network (106) or to the second access point (204).

2. The method of claim 1, wherein the WLAN (105, 205) and the cellular network (106) are operated by the same network operator.

3. The method of any of claims 1 to 2, further comprising dynamically lowering the transmit power of the frames during one time period and increasing the transmit power of the frames during a second time period.

4. The method of any of claims 1 to 3, wherein determining a need to steer traffic for one or more UE (103, 203) connected to the first access point (102, 202) comprises receiving instructions from a network operator to steer traffic for the one or more UE (103, 203) from the WLAN (105, 205) to the cellular network (106) or to the second access point (204) in the WLAN (105, 205).

5. A computer program product (600) stored in a non-transitory computer-readable medium and containing program code and data for performing the method of any of claims 1 to 4.

6. A first access point (102, 202) (access point) in a Wireless Local Area Network, WLAN, (105, 205) configured to steer traffic for one or more user equipment, UEs, (103, 203) from the first access point (102, 202) to a cellular network (106) or to a second access point (204) in the WLAN (105, 205) with an overlapping coverage area, said first access point (102, 202) comprising:
a transceiver circuit (510) configured to communicate with the one or more UEs (103, 203) in the WLAN (105, 205);
a processing circuit (520) configured to:
determine a need to steer traffic for one or more UEs (103, 203) connected to the first access point (102, 202) in the WLAN (105, 205) to a cellular network (106) or second access point (204) in the WLAN (105, 205);
select one or more UEs to be steered;
lower the transmit power of user data frames sent by the first access point (102, 202) in the WLAN (105, 205) to the selected UEs (103, 203), as a group, to steer the selected UEs (103, 203) to connect to the cellular network (106) or to the second access point (204) in the WLAN (105, 205).

7. The first access point (102, 202) (access point) of claim 6, wherein the WLAN (105, 205) and the cellular network (106) are operated by the same network operator.

8. The first access point (102, 202) (access point) of any of claims 6 to 7, wherein said processing circuit (520) is further configured to dynamically lower the transmit power of the frames during one time period and increase the transmit power of the frames during another time period.

9. The first access point (102, 202) (access point) of any of claims 6 to 8, wherein said processing circuit (520) determines a need to steer traffic for or more UEs (103, 203) by receiving instructions from a network operator to steer traffic for the one or more UEs (103, 203) from the WLAN (105, 205) to the cellular network (106) or to the second access point (204) in the WLAN (105, 205).

## Patentansprüche

1. Verfahren, das durch einen ersten Zugangspunkt (102, 202) in einem drahtlosen lokalen Netzwerk, WLAN, (105, 205) zum Lenken von Verkehr für ein oder mehrere Benutzergeräte, UEs, (103, 203) vom ersten Zugangspunkt (102, 202) zu einem zellularen Netzwerk (106) oder zu einem zweiten Zugangspunkt (204) im WLAN (105, 205) mit einem überlappenden Versorgungsbereich implementiert ist, das Verfahren umfassend:
Bestimmen eines Bedarfs an einer Verkehrslenkung für ein oder mehrere UEs (103, 203), die mit dem ersten Zugangspunkt (102, 202) verbunden sind, zu einem zellularen Netzwerk (106) oder einem zweiten Zugangspunkt (204) im WLAN (105, 205);
in Antwort auf das Bestimmen eines Bedarfs an einer Verkehrslenkung Auswählen eines oder mehrerer UEs, die zu lenken sind, und Senken der Sendeleistung von Benutzerdatenframes, die durch den ersten Zugangspunkt (102, 202) im WLAN (105, 205) zu den ausgewählten UEs (103, 203) als Gruppe gesendet werden, um die ausgewählten UEs (103, 203) zu lenken, sich mit dem zellularen Netzwerk (106) oder dem zweiten Zugangspunkt (204) zu verbinden.

2. Verfahren nach Anspruch 1, wobei das WLAN (105, 205) und das zellulare Netzwerk (106) von demselben Netzwerkbetreiber betrieben werden.

3. Verfahren nach einem der Ansprüche 1 bis 2, ferner umfassend ein dynamisches Senken der Sendeleistung der Frames während eines Zeitraums und Erhöhen der Sendeleistung der Frames während eines zweiten Zeitraums.

4. Verfahren nach einem der Ansprüche 1 bis 3, wobei ein Bestimmen eines Bedarfs an einer Verkehrslenkung für ein oder mehrere UEs (103, 203), die mit dem ersten Zugangspunkt (102, 202) verbunden sind, ein Empfangen von Anweisungen von einem Netzwerkbetreiber umfasst, Verkehr für das eine oder die mehreren UEs (103, 203) vom WLAN (105, 205) zum zellularen Netzwerk (106) oder zum zweiten Zugangspunkt (204) im WLAN (105, 205) zu lenken.

5. Rechnerprogrammprodukt (600), das in einem nicht transitorischen rechnerlesbaren medium gespeichert ist und Programmcode und Daten zum Durchführen des Verfahrens nach einem der Ansprüche 1 bis 4 beinhaltet.

6. Erster Zugangspunkt (102, 202) (Zugangspunkt) in einem drahtlosen lokalen Netzwerk, WLAN, (105, 205), der konfiguriert ist, Verkehr für ein oder mehrere Benutzergeräte, UEs, (103, 203) vom ersten Zugangspunkt (102, 202) zu einem zellularen Netzwerk (106) oder zu einem zweiten Zugangspunkt (204) im WLAN (105, 205) mit einem überlappenden Versorgungsbereich zu lenken, der erste Zugangspunkt (102, 202) umfassend:
eine Sendeempfängerschaltung (510), die konfiguriert ist, mit dem einen oder den mehreren UEs (103, 203) im WLAN (105, 205) zu kommunizieren;
eine Verarbeitungsschaltung (520), die konfiguriert ist zum:
Bestimmen eines Bedarfs an einer Verkehrslenkung für ein oder mehrere UEs (103, 203), die mit dem ersten Zugangspunkt (102, 202) im WLAN (105, 205) verbunden sind, zu einem zellularen Netzwerk (106) oder einem zweiten Zugangspunkt (204) im WLAN (105, 205);
Auswählen eines oder mehrerer UEs, die zu lenken sind;
Senken der Sendeleistung von Benutzerdatenframes, die durch den ersten Zugangspunkt (102, 202) im WLAN (105, 205) zu den ausgewählten UEs (103, 203) als Gruppe gesendet werden, um die ausgewählten UEs (103, 203) zu lenken, sich mit dem zellularen Netzwerk (106) oder dem zweiten Zugangspunkt (204) im WLAN (105, 205) zu verbinden.

7. Erster Zugangspunkt (102, 202) (Zugangspunkt) nach Anspruch 6, wobei das WLAN (105, 205) und das zellulare Netzwerk (106) von demselben Netzwerkbetreiber betrieben werden.

8. Erster Zugangspunkt (102, 202) (Zugangspunkt) nach einem der Ansprüche 6 bis 7, wobei die Verarbeitungsschaltung (520) ferner konfiguriert ist, die Sendeleistung der Frames während eines Zeitraums dynamisch zu senken und die Sendeleistung der Frames während eines anderen Zeitraums zu erhöhen.

9. Erster Zugangspunkt (102, 202) (Zugangspunkt) nach einem der Ansprüche 6 bis 8, wobei die Verarbeitungsschaltung (520) einen Bedarf an einer Verkehrslenkung für ein oder mehrere UEs (103, 203) durch Empfangen von Anweisungen von einem Netzwerkbetreiber bestimmt, Verkehr für das eine oder die mehreren UEs (103, 203) vom WLAN (105, 205) zum zellularen Netzwerk (106) oder zum zweiten Zugangspunkt (204) im WLAN (105, 205) zu lenken.

## Revendications

1. Procédé mis en oeuvre par un point d'accès (102, 202) dans un réseau local sans fil, WLAN, (105, 205) pour une orientation de trafic pour un ou plusieurs équipements d'utilisateur, UE, (103, 203) du premier point d'accès (102, 202) à un réseau cellulaire (106) ou à un deuxième point d'accès (204) dans le WLAN (105, 205) avec une zone de couverture de chevauchement, ledit procédé comprenant :
la détermination d'un besoin d'orientation de trafic pour un ou plusieurs UE (103, 203) raccordés au premier point d'accès (102, 202) vers un réseau cellulaire (106) ou un deuxième point d'accès (204) dans le WLAN (105, 205) ;
en réponse à la détermination d'un besoin d'orientation de trafic, la sélection d'un ou plusieurs UE à orienter et la réduction de la puissance de transmission de trames de données d'utilisateur envoyées par le premier point d'accès (102, 202) dans le WLAN (105, 205) aux UE sélectionnés (103, 203), sous forme d'un groupe, pour amener les UE sélectionnés (103, 203) à se raccorder au réseau cellulaire (106) ou au deuxième point d'accès (204) .

2. Procédé selon la revendication 1, dans lequel le WLAN (105, 205) et le réseau cellulaire (106) sont exploités par le même opérateur de réseau.

3. Procédé selon la revendication 1 à 2, comprenant en outre la réduction dynamique de la puissance de transmission des trames au cours d'une période de temps et l'augmentation de la puissance de transmission des trames au cours d'une deuxième période de temps.

4. Procédé selon l'une quelconque des revendications 1 à 3, dans lequel la détermination d'un besoin d'orientation de trafic pour un ou plusieurs UE (103, 203) raccordés au premier point d'accès (102, 202) comprend la réception d'instructions en provenance d'un opérateur de réseau pour une orientation de trafic pour l'un ou plusieurs UE (103, 203) du WLAN (105, 205) au réseau cellulaire (106) ou au deuxième point d'accès (204) dans le WLAN (105, 205).

5. Produit de programme informatique (600) mémorisé dans un support lisible par ordinateur non transitoire et contenant un code de programme et des données pour effectuer le procédé selon l'une quelconque des revendications 1 à 4.

6. Premier point d'accès (102, 202) (point d'accès) dans un réseau local sans fil, WLAN, (105, 205) configuré pour une orientation de trafic pour un ou plusieurs équipements d'utilisateur, UE, (103, 203) du premier point d'accès (102, 202) à un réseau cellulaire (106) ou à un deuxième point d'accès (204) dans le WLAN (105, 205) avec une zone de couverture de chevauchement, ledit premier point d'accès (102, 202) comprenant :
un circuit émetteur-récepteur (510) configuré pour communiquer avec l'un ou plusieurs UE (103, 203) dans le WLAN (105, 205) ;
un circuit de traitement (520) configuré pour :
la détermination d'un besoin d'orientation de trafic pour un ou plusieurs UE (103, 203) raccordés au premier point d'accès (102, 202) dans le WLAN (105, 205) vers un réseau cellulaire (106) ou un deuxième point d'accès (204) dans le WLAN (105, 205) ;
la sélection de l'un ou plusieurs UE à orienter ;
la réduction de la puissance de transmission de trames de données d'utilisateur envoyées par le premier point d'accès (102, 202) dans le WLAN (105, 205) aux UE sélectionnés (103, 203), sous forme d'un groupe, pour amener les UE sélectionnés (103, 203) à se raccorder au réseau cellulaire (106) ou au deuxième point d'accès (204) dans le WLAN (105, 205).

7. Premier point d'accès (102, 202) (point d'accès) selon la revendication 6, dans lequel le WLAN (105, 205) et le réseau cellulaire (106) sont exploités par le même opérateur de réseau.

8. Premier point d'accès (102, 202) (point d'accès) selon la revendication 6 à 7, dans lequel ledit circuit de traitement (520) est en outre configuré pour la réduction dynamique de la puissance de transmission des trames au cours d'une période de temps et l'augmentation de la puissance de transmission des trames au cours d'une autre période de temps.

9. Premier point d'accès (102, 202) (point d'accès) selon l'une quelconque des revendications 6 à 8, dans lequel ledit circuit de traitement (520) détermine un besoin d'orientation de trafic pour un ou plusieurs UE (103, 203) par la réception d'instructions en provenance d'un opérateur de réseau pour une orientation de trafic pour l'un ou plusieurs UE (103, 203) du WLAN (105, 205) au réseau cellulaire (106) ou au deuxième point d'accès (204) dans le WLAN (105, 205).
